# EUROPÄISCHE PATENTSCHRIFT

(11) **EP 2 008 778 B1**
(45) Veröffentlichungstag und Bekanntmachung des Hinweises auf die Patenterteilung: **19.08.2009**
(21) Anmeldenummer: 08158892.3
(22) Anmeldetag: 24.06.2008
(51) Int. Cl.: B25J 9/22, B25J 13/02

(54) **Verfahren und Vorrichtung zum Programmieren eines Industrieroboters**
Method and device for programming an industrial robot
Procédé et dispositif destinés à la programmation d'un robot industriel

(30) Priorität: 26.06.2007 DE 102007029398
(43) Veröffentlichungstag der Anmeldung: 31.12.2008
(73) Patentinhaber: KUKA Roboter GmbH, 86165 Augsburg (DE)
(72) Erfinder: Hietmann, Gerhard, 86405 Herbertshofen (DE)
(74) Vertreter: Patentanwälte Funk & Böss GbR

(56) Entgegenhaltungen:
- DE-A1- 3 810 054
- GB-A- 2 228 065
- US-B1- 6 385 508

## Beschreibung

Die Erfindung betrifft ein Verfahren und eine Vorrichtung zum Programmieren eines Industrieroboters.

Industrieroboter sind Handhabungsmaschinen, die zur selbsttätigen Handhabung von Objekten mit zweckdienlichen Werkzeugen ausgerüstet und in mehreren Bewegungsachsen insbesondere hinsichtlich Orientierung, Position und Arbeitsablauf programmierbar sind. Unter Verfahren zum Programmieren des Industrieroboters (Programmierverfahren) versteht man das planmäßige Vorgehen zur Erzeugung von Anwenderprogrammen.

Programmierverfahren lassen sich in direkte, indirekte und hybride Verfahren unterscheiden. Direkte Verfahren werden auch als On-line-Verfahren und indirekte Verfahren werden auch als Off-line-Verfahren bezeichnet. Hybride Verfahren stellen eine Kombination aus direkten und indirekten verfahren dar.

Zu den direkten Verfahren zählt die sogenannte Teach-In-Programmierung und das Play-Back-Verfahren.

Bei der Teach-In-Programmierung, kurz: Teachen, wird der Industrieroboter z.B. mittels geeigneter Vorrichtungen in die gewünschte Position und/oder Orientierung gefahren und die Position bzw. Orientierung in einer Steuerung des Industrieroboters gespeichert. Dieser Schritt wird solange wiederholt, bis die gesamte gewollte Bewegung des Industrieroboters durch angefahrene Raumpunkte beschrieben ist. So entsteht eine Abfolge von Raumpunkten, die der Industrieroboter nacheinander abfährt.

Geeignete Vorrichtungen für die Teach-In Programmierung sind z.B. Programmierhandgeräte mit Verfahrtasten, mit einer sogenannten Spacemouse, mit einem Joystick oder mit einer Kombination aus Tasten und radförmigem Regler.

Die DE 38 10 054 A1 offenbart ein Programmierhandgerät mit einem pistolenartigen Gehäuse. Für die Programmierung des Industrieroboters wird eine Vorgabe aufeinanderfolgender translatorischer und rotatorischer Bewegungen des Industrieroboters aufgeteilt. Dabei werden die translatorischen Bewegungen durch die Ausrichtung des frei im Raum beweglichen Programmierhandgerätes ausgeführt und ihr Endpunkt durch eine zeitbegrenzte Geschwindigkeitsvorgabe erzeugt. Die rotatorischen Bewegungen werden jeweils durch eine Änderung der räumlichen Winkellage des Programmierhandgerätes erreicht.

Die Aufgabe der vorliegenden Erfindung ist es, ein vereinfachtes Verfahren zum Programmieren eines Industrieroboters anzugeben.

Die Aufgabe der Erfindung wird gelöst durch ein Verfahren zum Programmieren eines Industrieroboters, aufweisend folgende Verfahrensschritte:
- Orientieren eines Programmierhandgerätes im Raum entsprechend einer gewünschten Orientierung, die ein zu bestimmendes Koordinatensystem einnehmen soll, wobei das Programmierhandgerät eingerichtet ist, seine Orientierung im Raum zu erkennen,
- Verriegeln der momentanen Orientierung des Programmierhandgerätes als gewünschte Orientierung des Koordinatensystems durch Betätigen eines ersten Eingabemittels insbesondere des Programmierhandgerätes, so dass die Orientierung des Koordinatensystems bei einer weiteren Bewegung des Programmierhandgerätes unverändert bleibt, und
- Bewegen eines ausgewählten Punktes in mindestens einer im gewünschten Koordinatensystem definierten Richtung oder Orientierung durch Betätigen von zweiten Eingabemitteln des Programmierhandgerätes.

Gemäß einem Aspekt der Erfindung wird eine Vorrichtung bereitgestellt, die einen Industrieroboter mit mehreren Roboterachsen und mit einem Steuerrechner zum Steuern der Roboterachsen und ein mit dem Steuerrechner kommunizierendes Programmierhandgerät zum Programmieren des Steuerrechners aufweist, wobei das Programmierhandgerät und der Industrieroboter derart ausgeführt sind, dass mit ihnen das erfindungsgemäße Verfahren ausführbar ist.

Mit dem Programmierhandgerät kann die Orientierung und gegebenenfalls auch die Position des ausgewählten Punktes, der beispielsweise der sogenannte Tool Center Point (TCP) oder der Flansch des Industrieroboters ist, eingestellt werden. Der Industrieroboter umfasst die Roboterachsen, die z.B. mittels Antrieben derart verstellbar sind, dass der ausgewählte Punkt die aufgrund der Orientierung des Programmierhandgerätes vorgegebene Orientierung des Koordinatensystems im Raum einnimmt. Um die Orientierung im Raum des Programmierhandgerätes zu bestimmen, ist dieses eingerichtet, seine Orientierung im Raum zu erkennen, wie dies allgemein z.B. aus der in der Einleitung genannten DE 38 10 054 A1 bekannt ist.

Das Programmierhandgerät kann z.B. einen Griff und eine Kamera mit einer bildgebenden Optik umfassen, wobei die Kamera derart zumindest indirekt mit dem Griff gelenkig verbunden ist, dass sich die bildgebende Optik der Kamera unabhängig von der Stellung des Griffs im Raum in Richtung der Schwerkraft selbsttätig ausrichtet, und zumindest indirekt derart mit dem Griff gelenkig verbunden ist, dass bei einer Drehung des Griffs um eine in Richtung der Schwerkraft verlaufenden ersten Achse sich die Optik der Kamera entsprechend der Drehung des Griffs um die erste Achse dreht. Die erste Achse verläuft in Richtung der Schwerkraft, in deren Richtung sich auch die Optik der Kamera unabhängig von der Stellung des Griffs im Raum automatisch ausrichtet. Bei einer Drehung des Griffs um die erste Achse dreht sich die Kamera bzw. deren Optik ebenfalls um die erste Achse. Aufgrund von mit der Kamera aufgenommenen Bildern einer Ebene rechtwinklig zur ersten Achse kann ein erster Winkel, der einer Drehung des Griffs um die erste Achse zugeordnet ist, berechnet werden.

Die Orientierung des ausgewählten Punkts hat generell drei Freiheitsgrade im Raum. Eine Teilorientierung dieses Punktes kann mittels einer Drehung dieses Punktes bezüglich der in Richtung der Schwerkraft verlaufenden Achse, die üblicherweise als z-Achse bezeichnet wird, beschrieben werden. Die z-Achse entspricht der ersten Achse des obenstehend erwähnten Programmierhandgerätes, sodass dieses mit dem Industrieroboter derart zusammenwirken kann, dass sich der ausgewählte Punkt des Industrieroboters mit der Drehung des Griffs des Programmierhandgerätes entsprechend der Drehung des Griffs um die z-Achse dreht. Insbesondere kann dieses Programmierhandgerät derart ausgeführt sein, dass sich der ausgewählte Punkt um die z-Achse um denselben ersten Winkel dreht, mit dem der Griff des Programmierhandgerätes um die erste Achse gedreht wird.

Dieses Programmierhandgerät kann wenigstens eine zweite Achse und eine von der zweiten Achse unabhängige dritten Achse aufweisen, bezüglich derer die Kamera zumindest indirekt mit dem Griff gelenkig verbunden ist. Die zweite Achse ist insbesondere rechtwinklig zur ersten und dritten Achse ausgerichtet.

Wie bereits obenstehend erläutert, umfasst die Orientierung des ausgewählten Punktes insbesondere des Industrieroboters drei Freiheitsgrade. Zur Beschreibung der Orientierung im Raum kann beispielsweise das Verfahren Roll, Pitch, Yaw (Rollen, Nicken, Gieren) aus der Luft- und Schifffahrt angewendet werden. Wird die sogenannte Euler-Konvention verwendet, werden die Rotationen nacheinander um die Achsen der neuen Koordinatensysteme durchgeführt, wobei die Reihenfolge der Rotationen angegeben werden muss. Ist z.B. der in kartesischen Koordinaten beschriebenen Z-Achse der Yaw-Winkel, der Y-Achse der Pitch-Winkel und der X-Achse der Roll-Winkel zugeordnet und wird die Reihenfolge Z-Achse, Y-Achse und X-Achse verwendet, dann erfolgt zunächst für die Ermittlung der Orientierung des ausgewählten Punktes des Industrieroboters eine Drehung um die Z-Achse um einen Yaw-Winkel, dann eine Drehung um einen Pitch-Winkel um die Y-Achse des durch die Drehung um die Z-Achse entstehenden neuen Koordinatensystems und anschließend eine Drehung um einen Roll-Winkel um die X-Achse des wiederum aufgrund der Drehung um die Y-Achse entstehenden neuen Koordinatensystems.

Die Drehung um die Z-Achse wird auch als "Gieren", die Drehung um die Y-Achse wird auch als "Nicken" und die Drehung um die X-Achse wird auch als "Rollen" bezeichnet.

Aufgrund der Ausrichtung der ersten Achse dieses Programmierhandgerätes in Richtung der Schwerkraft entspricht der erste Winkel dem Yaw-Winkel. Durch geeignetes Ausrichten der zweiten und dritten Achse kann eine dieser Achsen dem Roll- und die andere Achse dem Pitch-Winkel zugeordnet werden. Somit ist es möglich, aufgrund einer Drehung des erfindungsgemäßen Programmierhandgerätes um die zweite und dritte Achse den Pitch- und Roll-Winkel des ausgewählten Punktes des Industrieroboters einzustellen.

Konventionelle Programmierverfahren sind derart ausgeführt, dass die Orientierung des vorgegebenen Punktes stets der Orientierung des Programmierhandgerätes folgt.

Erfindungsgemäß wird jedoch zunächst das Programmierhandgerätes im Raum entsprechend der gewünschten Orientierung, die das zu bestimmende Koordinatensystem einnehmen soll, orientiert. Ist die gewünschte Orientierung erreicht, wird dann erfindungsgemäß diese Orientierung durch Betätigen des ersten Eingabemittels verriegelt, sodass sich die Orientierung des Koordinatensystems beim Bewegen des Programmierhandgerätes nicht mehr ändert. Das erste Eingabemittel kann z.B. eine Taste oder ein Druckknopf sein und/oder kann Teil des Programmierhandgerätes sein. Somit wird es der Bedienperson erleichtert, den ausgewählten Punkt durch Betätigen von Eingabemitteln des Programmierhandgerätes (zweite Eingabemittel) bezüglich wenigstens einer vorgegebenen oder mittels des Programmierhandgerätes vorgebbaren Achse unabhängig von einer Orientierung des Programmierhandgerätes im Raum zu bewegen, nachdem die gewünschte Orientierung des Koordinatensystems verriegelt wurde.

Soll nun anschließend z.B. die Position des ausgewählten Punktes mittels des Programmierhandgerätes verändert werden, dann kann z.B. das Programmierhandgerät in eine für die Bedienperson relativ angenehme oder zumindest in eine im Vergleich zu der Stellung, in der das Programmierhandgerät zum Zeitpunkt des Verriegelns ausgerichtet ist, angenehmere Stellung gebracht werden, ohne dass sich die Orientierung des Koordinatensystems ändert.

Die Orientierung im Raum des Programmierhandgerätes kann mittels Koordinaten eines dem Programmierhandgerät zugeordneten Handgerätkoordinatensystem beschrieben sein, das mit einem Roboterkoordinatensystem des Industrieroboters abgeglichen ist. Das Handgerätkoordinatensystem und das Roboterkoordinatensystem können insbesondere kartesische Koordinatensysteme sein.

Am Industrieroboter kann ein Werkzeug, z.B. am Flansch des Industrieroboters, befestigt sein, dem ein Werkzeugkoordinatensystem zugeordnet ist, dessen Ursprung insbesondere im Tool Center Point liegt. Handelt es sich bei dem ausgewählten Punkt um den Tool Center Point, dann kann das Handgerätkoordinatensystem mit dem Roboterkoordinatensystem des Industrieroboters derart abgeglichen sein, dass wenigstens eine der Koordinatenachsen des Handgerätkoordinatensystems mit einer der Koordinatenachsen des Werkzeugkoordinatensystem übereinstimmt. Es können aber auch alle Koordinatenachsen des Handgerätkoordinatensystems mit entsprechenden Koordinatenachsen des Werkzeugkoordinatensystem übereinstimmen.

Nach einer Ausführungsform stimmen die übereinstimmenden Koordinatenachsen des Handgerätkoordinatensystems und des Werkzeugkoordinatensystems mit der Längsachse des Programmierhandgerätes überein und/oder zeigen in Werkzeugstoßrichtung des Werkzeugs. Dann stimmen die Werkzeugstoßrichtung und die Orientierung des Programmierhandgerätes längs seiner Längsachse beim Einstellen der gewünschten Orientierung mit der Längsachse des Programmierhandgerätes überein. Dies kann die Bedienung des Programmierhandgerätes erleichtern.

Nach einer Ausführungsform des erfindungsgemäßen Verfahrens weist dieses ferner den folgenden Verfahrensschritt auf: Bewegen des ausgewählten Punktes entlang genau einer vorgegebenen oder durch das Programmierhandgerät vorgebbaren Achse nach dem Verriegeln der gewünschten Orientierung des Koordinatensystems durch Betätigen der zweiten Eingabemittel. Diese Eingabemittel umfassen z.B. Tasten, ein Rändelrad, ein Joypad, einen Joystick, einen Touchball oder einen Trackball. Aufgrund dieser Variante des erfindungsgemäße Verfahrens kann demnach zunächst in relativ einfacher Weise die gewünschte Orientierung des Koordinatensystems eingestellt werden und anschließend die Position des ausgewählten Punktes entlang der Achse (Verfahrachse) durch Betätigen der zweiten Eingabemittel des Programmierhandgerätes verfahren werden. Für das Verfahren kann das Programmierhandgerät beliebig bewegt oder in eine beliebige Stellung gebracht werden, ohne dass sich die Orientierung des Koordinatensystems ändert.

Die Verfahrachse kann beispielsweise durch die Ausrichtung der Längsachse des Programmierhandgerätes insbesondere zum Zeitpunkt des Verriegelns der gewünschten Orientierung des Koordinatensystems definiert werden oder in Werkzeugstoßrichtung des am Industrieroboter befestigten Werkzeugs insbesondere zum Zeitpunkt des Verriegelns der gewünschten Orientierung des Koordinatensystems zeigen. Im zweiten Fall wird der ausgewählte Punkt demnach in Richtung des Werkzeugstoßpunktes verfahren. Die Verfahrachse kann auch durch die Orientierung einer Koordinatenachse des Handgerätkoordinatensystem oder des Werkzeugkoordinatensystems beispielsweise zum Zeitpunkt des Verriegelns der gewünschten Orientierung des Koordinatensystems definiert werden. Die Verfahrachse kann aber auch anderweitig definiert werden, z.B. durch Ausrichten des Programmierhandgerätes beispielsweise nach dem Verriegeln oder bevor dem Einstellen der Orientierung des Koordinatensystems.

Gemäß einer weiteren Ausführungsform des erfindungsgemäßen Verfahrens weist dieses ferner folgenden Verfahrensschritt auf: Bewegen des ausgewählten Punktes entlang genau einer Verfahrebene durch Betätigen der zweiten Eingabemittel, wobei die Verfahrebene durch zwei vorgegebene oder insbesondere durch das Programmierhandgerät vorgebbare Achse nach dem Verriegeln der gewünschten Orientierung des Koordinatensystems definiert ist. Diese Eingabemittel umfassen z.B. Tasten, ein Rändelrad, ein Joypad, einen Joystick, einen Touchball oder einen Trackball. Aufgrund dieser Variante des erfindungsgemäßen Verfahrens kann demnach zunächst in relativ einfacher Weise die gewünschte Orientierung des Koordinatensystems eingestellt werden und anschließend die Position des ausgewählten Punktes innerhalb der Verfahrebene durch das Betätigen der zweiten Eingabemittel eingestellt werden. Die Verfahrebene wird z.B. durch die Ausrichtung der Längsachse des Programmierhandgerätes, durch die Werkzeugstoßrichtung des am Industrieroboter befestigten Werkzeugs, durch die Orientierung zweier Koordinatenachsen des Handgerätkoordinatensystems oder durch die Orientierung zweier Koordinatenachsen des Werkzeugkoordinatensystems insbesondere zum Zeitpunkt des verriegelns der gewünschten Orientierung des Koordinatensystems definiert. Die Verfahrebene wird gemäß dieser Ausführungsform z.B. zum Zeitpunkt des Verriegelns oder auch zu einem anderen Zeitpunkt, insbesondere nach dem Verriegeln z.B. durch Ausrichten des Programmierhandgerätes definiert.

Das erfindungsgemäße Verfahren kann auch folgende Punkte realisieren:
- die Verfahrgeschwindigkeit kann von einer das Programmierhandgerät bedienenden Person eingestellt werden,
- neben der Richtung kann diese Person z.B. über den Grad der Auslenkung spezieller Eingabeelemente auch die Geschwindigkeit variieren,
- die Bewegung kann kontinuierlich entlang der Verfahrachse sein, kann aber auch schrittweise kommandiert werden; dann bewegt sich z.B. der TCP des Industrieroboters pro Tastendruck, wenn die Eingabemittel Tasten sind, um eine vorgegebene wählbare Distanz in Richtung der Verfahrachse,
- geeignete Eingabegeräte sind z.B. Joystick oder Trackball und können eine Bewegungskommandierung nicht nur entlang der Handverfahrgeräte-Koordinatenachsen, sondern auch in jede Richtung innerhalb der Verfahrebene ermöglichen.

Nach einer weiteren Variante des erfindungsgemäßen Verfahrens weist dieses ferner folgende Verfahrensschritte auf:
- Definieren einer Rotationsachse durch Orientieren des Programmierhandgerätes im Raum nach dem Verriegeln der gewünschten Orientierung des Koordinatensystems und
- Drehen des ausgewählten Punktes um die Rotationsachse durch Betätigen der zweiten Eingabemittel des Programmierhandgerätes.
   Die Rotationsachse kann insbesondere durch den ausgewählten Punkt verlaufen. Mittels dieser Variante des erfindungsgemäßen Verfahrens ist es z.B. möglich, zunächst eine relativ grobe Orientierung des ausgewählten Punktes durch Orientieren des Programmierhandgerätes einzustellen. Nach dem Verriegeln der Orientierung, kann eine gewissen Umorientierung durch Drehen des ausgewählten Punktes um die Rotationsachse erfolgen. Für die Drehung kann das Programmierhandgerät beliebig bewegt oder ausgerichtet werden, da nach dem Verriegeln die Orientierung des Koordinatensystems nicht mehr durch die Stellung des Programmierhandgerätes verändert wird. Die Rotationsachse kann beispielsweise die Längsachse oder eine der Koordinatenachsen des Handgerätkoordinatensystems sein. Die Rotationsachse kann aber auch beliebig anders definiert werden.

Nach einer weiteren Variante des erfindungsgemäßen Verfahrens weist dieses ferner folgende Verfahrensschritte auf:
- Definieren der Achse, bezüglich derer der ausgewählte Punkt durch Betätigen der zweiten Eingabemittel des Programmierhandgerätes bewegt wird, durch Orientieren des Programmierhandgerätes im Raum nach dem Verriegeln der gewünschten Orientierung des Koordinatensystems, wobei diese Achse durch den ausgewählten Punkt verläuft, und
- Umorientieren des ausgewählten Punktes durch Betätigen der zweiten Eingabemittel des Programmierhandgerätes, sodass dieser in Richtung der Achse zeigt.
   Der ausgewählte Punkt kann insbesondere in Richtung dieser Achse solange umorientiert werden, bis er entweder in Richtung dieser Achse ausgerichtet ist oder solange die zweiten Eingabemittel betätigt werden.

Die Geschwindigkeit des Umorientierens kann von der das Programmierhandgerät bedienenden Person auch eingestellt werden. Neben der Umorientierungsrichtung kann diese Person über den Grad der Auslenkung spezieller Eingabeelemente auch die Geschwindigkeit variieren. Abgesehen von einer kontinuierlichen Umorientierungsbewegung kann auch eine schrittweise Bewegung kommandiert werden. Die Werkzeugstoßachse kann sich dabei dann pro Betätigungsvorgang, z.B. durch Tastendruck um einen vorgegebenen wählbaren Winkelwert in die definierte Richtung bewegen.

Nach einer Ausführungsform des erfindungsgemäßen Verfahrens wird die Orientierung des ausgewählten Punktes während einer Bewegung des Programmierhandgerätes entsprechend der Orientierung des Programmierhandgerätes im Raum vor dem Erreichen und Verriegeln der gewünschten Orientierung des Koordinatensystems nachgefahren.

Nach einer Variante des erfindungsgemäßen Verfahrens weist dieses folgende weitere Verfahrensschritte auf:
- Orientieren des Programmierhandgerätes im Raum entsprechend der gewünschten Orientierung des Koordinatensystems im Raum ohne ein Nachführen der Orientierung des ausgewählten Punktes,
- Betätigen eines dritten Eingabemittels insbesondere des Programmierhandgerätes, wenn das Programmierhandgerät entsprechend der gewünschten Orientierung ausgerichtet ist,
- Bewegen der Roboterachsen derart, dass der ausgewählte Punkt entsprechend der Orientierung des Programmierhandgerätes zum Zeitpunkt des Betätigens des dritten Eingabemittels orientiert wird und
- Verriegeln der gewünschten Orientierung des ausgewählten durch Betätigen des ersten Eingabemittels, sodass die Orientierung des vorgegebenen Punktes bei einer Bewegung des Programmierhandgerätes unverändert bleibt.
   Gemäß dieser Variante wird zunächst das Programmierhandgerät derart orientiert, dass dies der gewünschten Orientierung entspricht. Der Industrieroboter folgt jedoch nicht der Bewegung des Programmierhandgerätes. Ist die gewünschte Orientierung gefunden, d.h. ist das Programmierhandgerät entsprechend ausgerichtet, dann wird das dritte Eingabemittel betätigt, das insbesondere Teil des Programmierhandgerätes sein kann. Daraufhin bewegt sich der ausgewählte Punkt in die gewünschte Orientierung und wird dann verriegelt. Anschließend kann der ausgewählte Punkt z.B. mittels des Programmierhandgerätes in die gewünschte Position gebracht werden, ohne dass sich die Orientierung des ausgewählten Punktes ändert, auch wenn das Programmierhandgerät bewegt wird oder sich seine Stellung im Raum ändert.

Ausführungsbeispiele der Erfindung sind exemplarisch in den beigefügten schematischen Zeichnungen dargestellt. Es zeigen:
- Figs. 1, 2: einen Industrieroboter,
- Figs. 3, 4: jeweils ein Programmierhandgerät,

- Fig. 5: ein Flussdiagramm und
- Figs. 6, 7: Verwendungen des Programmierhandgerätes der Fig. 3 veranschaulichende Szenarien.

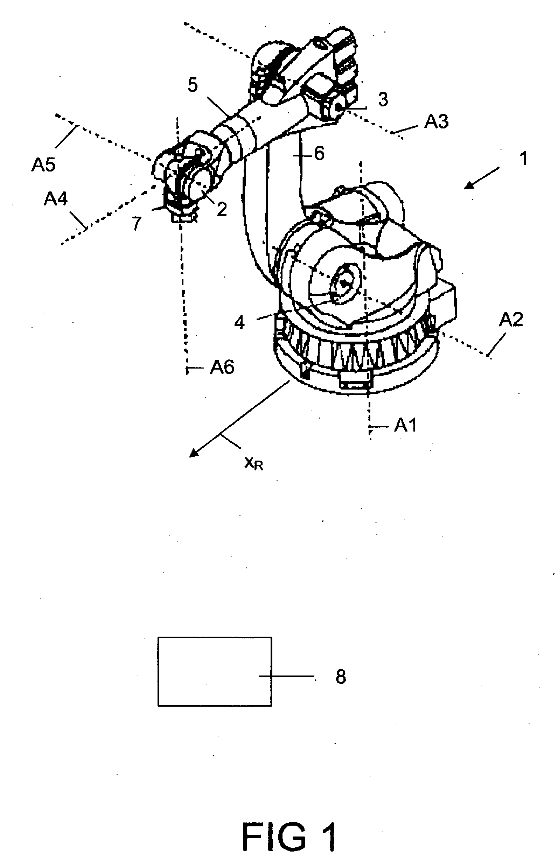

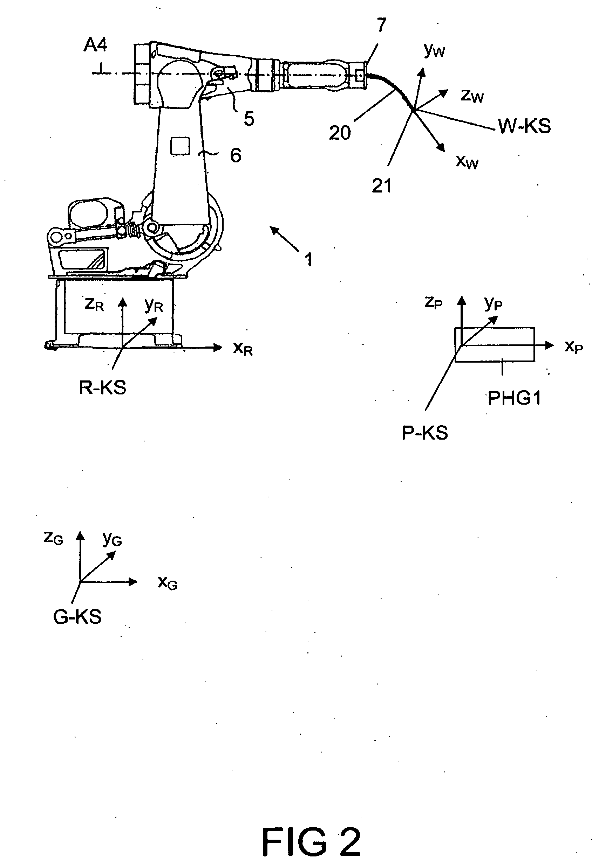

Die Figuren 1 und 2 zeigen einen Industrieroboter 1 mit einer Kinematik für Bewegungen in beispielsweise sechs Freiheitsgraden. Der Industrieroboter 1 weist in allgemein bekannter Weise Gelenke 2 bis 4, Hebel 5, 6, sechs Bewegungsachsen A1 bis A6 und einen Flansch 7 auf, an dem ein Werkzeug 20, wie in der Fig. 2 gezeigt, befestigt sein kann.

Jede der Bewegungsachsen A1 bis A6 wird von einem nicht näher dargestellten Antrieb bewegt. Die Antriebe umfassen beispielsweise jeweils einen elektrischen Motor und Getriebe, wie es dem Fachmann allgemein bekannt ist.

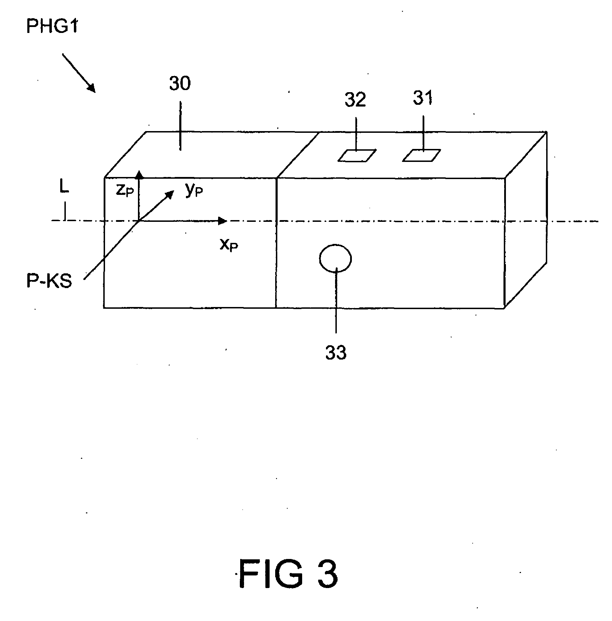

Der Industrieroboter 1 weist ferner einen Steuerrechner 8 auf, der mit den Antrieben des Industrieroboters 1 in nicht dargestellter Weise verbunden ist und diese in allgemein bekannter Weise mittels eines auf dem Steuerrechner 8 laufenden Rechnerprogramms steuert, sodass der Flansch 7 des Industrieroboters 1 eine vorgegebene Bewegung durchführt. Um das den Industrieroboter 1 steuernde Rechnerprogramm zu erstellen, wird im Falle des vorliegenden Ausführungsbeispiels ein in der Fig. 3 näher dargestelltes Programmierhandgerät PHG1 verwendet.

In der Fig. 2 sind ferner mehrere Koordinatensysteme dargestellt, wie ein sogenanntes Weltkoordinatensystem G-KS, ein Roboterkoordinatensystem R-KS, ein Werkzeugkoordinatensystem W-KS und ein Handgerätkoordinatensystem P-KS des Programmierhandgerätes PHG1. Im Falle des vorliegenden Ausführungsbeispiels handelt es sich bei den Koordinatensystemen um kartesische Koordinatensysteme mit entsprechenden Koordinatenachsen x*_{W}, y_{W}, z_{W}; x*_{R}, y*_{R}, z_{R}; x_{G}, y_{G}, z_{G}; x_{P}, y_{P}, z_{P}.* Außerdem liegt der Ursprung des Roboterkoordinatensystems R-KS im Roboterfußpunkt und der Ursprung des Werkzeugkoordinatensystems W-KS im Tool Center Point (TCP) 21 des Industrieroboters 1.

Mit dem Programmierhandgerät PHG1 kann der Industrieroboter 1 handverfahren werden, d.h. mit dem Programmierhandgerät PHG1 kann die Position und die Orientierung des Flansches 7 im Raum bzw. die Position und Orientierung des TCPs 21 im Raum eingestellt und anschließend die angefahrene Position mit Orientierung im Steuerrechner 8 abgespeichert werden. Für eine Kommunikation zwischen dem Programmierhandgerät PHG1 kann dieses z.B. mittels einer nicht dargestellten elektrischen Leitung mit dem Steuerrechner 8 verbunden sein. Auch eine drahtlose Verbindung zwischen dem Steuerrechner 8 und dem Programmierhandgerät PHG1 ist möglich.

Für das Handverfahren des Industrieroboters 1 kann eine in den Figuren nicht näher dargestellte Bedienperson das Programmierhandgerät PHG1 mit ihrer Hand in einem Bereich 30 halten und die Orientierung des Flansches 7 bzw. des TCPs 21 durch ein entsprechendes Ausrichten des Programmierhandgerätes PHG1 im Raum einstellen; d.h. die Orientierung des Flansches 7 bzw. des TCPs 21 wird abhängig von der Orientierung des Programmierhandgerätes PHG1 eingestellt.

Um die Orientierung bzw. Ausrichtung des Programmierhandgerätes PHG1 im Raum zu ermitteln, umfasst dieses eine im allgemeinen bekannte und daher nicht näher dargestellte Vorrichtung zum Erkennen der Lage des Programmierhandgerätes PHG1 im Raum. Solche Mittel umfassen z.B. 3D Magnetometer, die das Gravitationsfeld und das Erdmagnetfeld messen, und aufgrund dieser Messungen die Orientierung des Programmierhandgerätes PHG1 im Raum ermitteln.

Um den Industrieroboter 1 mittels des Programmierhandgeräts PHG1 zu bewegen, wird im Falle des vorliegenden Ausführungsbeispiels zunächst das Handgerätkoordinatensystem P-KS des Programmierhandgerätes PHG1 mit dem Roboterkoordinatensystem R-KS in Bezug gebracht, was in der Regel als "Abgleich" bezeichnet wird.

Im Falle des vorliegenden Ausführungsbeispiels ist das Handgerätkoordinatensystem P-KS derart gewählt, dass die x-Achse mit den Koordinaten x*_{P}* längs der Längsachse L des Programmierhandgerätes PHG1 verläuft und das Programmierhandgerät PHG1 mit dem Industrieroboter 1 derart abgeglichen wird, dass zumindest die x-Achse des Handgerätkoordinatensystems P-KS mit der x-Achse des Werkzeugkoordinatensystems W-KS übereinstimmt. Die x-Achse des Werkzeugkoordinatensystems W-KS zeigt hier in Werkzeugstoßrichtung des Werkzeugs 20. Im Falle des vorliegenden Ausführungsbeispiels wird ferner das Programmierhandgerät PHG1 mit dem Industrieroboter 1 derart abgeglichen, dass sich das Handgerätkoordinatensystem P-KS des Programmierhandgerätes PHG1 mit dem Werkzeugkoordinatensystem W-KS deckt.

Somit richtet sich im Falle des vorliegenden Ausführungsbeispiels der TCP 21 und die Werkzeugstoßrichtung entsprechend der Orientierung des Programmierhandgerätes PHG1 aus.

Im Falle des vorliegenden Ausführungsbeispiels kann die Position des Flansches 7 bzw. des TCPs 21 im Raum mittels Eingabemittel des Programmierhandgeräts PHG1 eingestellt werden, die beispielweise erste und zweite Tasten 31, 32 sein können, wie es in der Fig. 3 gezeigt ist. Die beiden Tasten 31, 32 sind im Falle des vorliegenden Ausführungsbeispiels derart ausgeführt, dass der Steuerrechner 8 die Achsen A1-A6 mittels der Antriebe derart verstellt, dass sich der Flansch 7 bzw. der TCP 21 beim Betätigen der ersten Taste 31 in Richtung der positiven x-Achse und beim Betätigen der zweiten Taste 32 in Richtung der negativen x-Achse des Programmierhandgerätes PHG1 bzw. des Werkzeugkoordinatensystems W-KS bewegt. Andere Eingabemittel, wie beispielsweise Rändelräder, ein Joypad, ein Joystick, ein Touchpad, ein Trackball, sind auch möglich.

Im Falle des vorliegenden Ausführungsbeispiels ist das Programmierhandgerät PHG1 derart ausgeführt, dass es in seinem Grundzustand wie ein konventionelles Programmierhandgerät funktioniert, d.h. bei einer Bewegung des Programmierhandgerätes PHG1 bzw. bei einer Änderung seiner Orientierung im Raum ändert sich entsprechend auch die Orientierung des Flansches 7 bzw. des TCPs 21, sodass im Wesentlichen stets die Koordinatenachsen des Koordinatensystems P-KS des Programmierhandgerätes PHG1 mit den Koordinatenachsen des Werkzeugkoordinatensystems W-KS übereinstimmen.

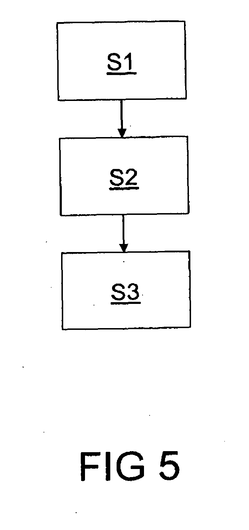

Im Falle des vorliegenden Ausführungsbeispiels ist das Programmierhandgerät PHG1 ferner derart ausgeführt, sodass mit ihm das folgende, mittels eines in der Fig. 5 gezeigten Flussdiagramms veranschaulichte Verfahren durchgeführt werden kann:

Nach dem Abgleich des Programmierhandgerätes PHG1 richtet die Bedienperson dieses längs seiner Längsachse L, also längs der x-Achse des Handgerätkoordinatensystem P-KS des Programmierhandgerätes PHG1 derart aus, dass die Verfahrrichtung, projiziert in den TCP 21 des Industrieroboters 1, der gewünschten Bewegungsrichtung entspricht, Schritt S1 des Flussdiagramms. Dadurch richtet sich der TCP 21 entsprechend der Ausrichtung des Programmierhandgerätes PHG1 aus.

Anschließend wird die momentane Orientierung des TCP 21 durch ein weiteren Eingabemittels des Programmierhandgerätes PHG1, z.B. durch Betätigen einer in der Fig. 3 gezeigten Verriegelungstaste 33 verriegelt, sodass sich die Orientierung des TCPs 20 bzw. des Flansches 7 bei einer Bewegung des Programmierhandgerätes PHG1 nicht mehr ändert, Schritt S2. Dadurch wird die beim Betätigen des weiteren Eingabemittels eingenommene Orientierung des TCPs 21 im Steuerrechner 8 gespeichert.

Anschließend kann die Bedienperson durch Betätigen der ersten und zweiten Tasten 31, 32 unabhängig von der Ausrichtung des Programmierhandgerätes PHG1 im Raum den TCP 21 längs der x-Achse des Handgerätkoordinatensystems P-KS bewegen, d.h. der TCP 21 kann mittels der beiden Tasten 31, 32 längs der zum Zeitpunkt des Betätigens des weitern Eingabemittels im Raum verriegelten ("eingefrorenen") x-Achse des Handgerätkoordinatensystems P-KS bewegt werden, Schritt S3. Dabei kann während des Verfahrens des TCPs 21 das Programmierhandgerät PHG1 bewegt werden, ohne dass sich die Verfahrrichtung des TCPs 21 dadurch ändert.

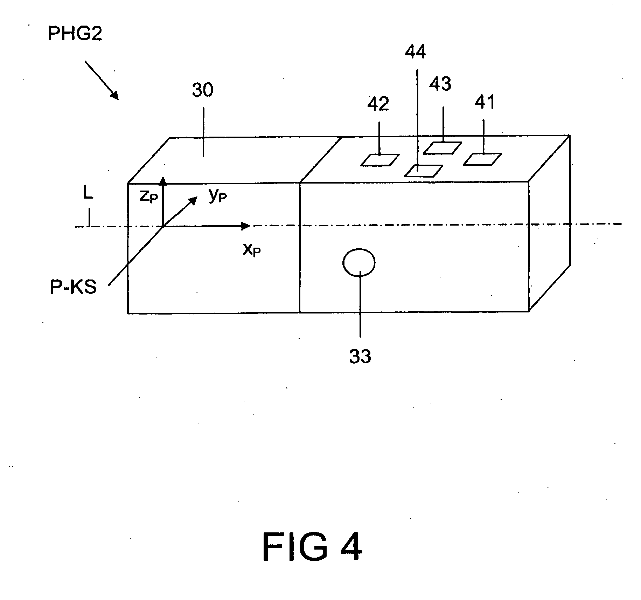

Das in der Fig. 3 dargestellte Programmierhandgerät PHG1 weist die beiden Tasten 31, 32 als Eingabemittel auf, wodurch der Industrieroboter 1 längs der x-Achse verfahren werden kann. Die Fig. 4 zeigt ein weiteres Programmierhandgerät PHG2, das anstelle des Programmierhandgerätes PHG1 für das Verfahren des Industrieroboters 1 verwendet werden kann. Wenn folgend nicht anders beschrieben, dann sind Bestandteile des in der Fig. 4 gezeigten Programmierhandgerätes PHG2, die mit Bestandteilen des in der Fig. 3 gezeugten Programmierhandgeräte PHG1 weitgehend bau- und funktionsgleich sind, mit denselben Bezugszeichen versehen.

Das Programmierhandgerät PHG2 unterscheidet sich im Wesentlichen vom Programmierhandgerät PHG1 durch dessen Eingabemittel, die ein zweidimensionales Bewegen des Flansch 7 bzw. des TCPs 21 erlauben. Dazu weist im Falle des vorliegenden Ausführungsbeispiels das Programmierhandgerät PHG2 vier Tasten 41-44 auf. Andere Eingabemittel, wie beispielsweise Rändelräder, ein Joypad, ein Joystick, ein Touchpad, ein Trackball, sind auch möglich.

Die Tasten 41-44 sind im Falle des vorliegenden Ausführungsbeispiels derart ausgeführt, dass der Steuerrechner 8 die Achsen A1-A6 mittels der Antriebe derart verstellt, dass sich der Flansch 7 bzw. der TCP 21 beim Betätigen der ersten Taste 41 in Richtung der positiven x-Achse, beim Betätigen der zweiten Taste 42 in Richtung der negativen x-Achse, beim Betätigen der dritten Taste 43 in Richtung der positiven y-Achse und beim Betätigen der vierten Taste 44 in Richtung der negativen y-Achse des Programmierhandgerätes PHG2 bzw. des Werkzeugkoordinatensystems W-KS bewegt.

Im Falle des vorliegenden Ausführungsbeispiels ist das Programmierhandgerät PHG2 derart ausgeführt, dass nach dem Abgleich und dem Ausrichten der gewünschten Orientierung des TCPs 21 durch entsprechendes Ausrichten des Programmierhandgeräts PHG2 die momentane Orientierung des TCP 21 durch Betätigen der Verriegelungstaste 33 verriegelt wird, sodass sich die Orientierung des TCPs 21 bzw. des Flansches 7 bei einer Bewegung des Programmierhandgerätes PHG2 nicht mehr ändert.

Im Gegensatz zum Programmierhandgerät PHG1 wird durch das Programmierhandgerät PHG2 keine Verfahrachse, sondern eine Verfahrebene festgelegt, die im Falle des vorliegenden Ausführungsbeispiels durch die x- und y-Achsen des Handgerätkoordinatensystems P-KS des Programmierhandgerätes PHG2. Somit kann die Bedienperson durch Betätigen der ersten und zweiten Tasten 41, 42 unabhängig von der Ausrichtung des Programmierhandgerätes PHG2 im Raum den TCP 21 längs der x-Achse des Handgerätkoordinatensystems P-KS und durch Betätigen der dritten und vierten Tasten 43, 44 unabhängig von der Ausrichtung des Programmierhandgerätes PHG2 im Raum den TCP 21 längs der y-Achse des Handgerätkoordinatensystems P-KS bewegen. Die Bedienperson kann demnach den TCP 21 frei innerhalb der durch die x- und y-Achse definierte Verfahrebene bewegen.

Wenn die Programmierhandgeräte dreidimensionale Eingabemittel aufweisen, dann ist auch eine Bewegung im Raum möglich.

Je nach Anwendung kann es sein, dass die Bedienperson die Orientierung des Programmierhandgerätes PHG1, PHG2 im Raum nicht beliebig genau ausrichten kann, sodass die Orientierung des TCPs 21 nicht mit der gewünschten Genauigkeit ausgerichtet werden kann. Dann ist es eventuell nicht möglich, nach Betätigen des weiteren Eingabemittels (Verriegelungstaste 33) mit dem Programmierhandgerät PHG1, PHG2 mit der notwendigen Genauigkeit im Werkzeugkoordinatensystem W-KS oder insbesondere in Werkzeugstoßrichtung zu verfahren. Dies kann für einige Anwendungen nötig sein, beispielsweise wenn mit einem am Flansch 7 befestigter Greifer einen Gegenstand relativ genau platzieren soll.

Abhilfe kann dadurch erreicht werden, dass das Programmierhandgerät PHG1, PHG2 nur ungefähr, z.B. mit einigen Grad Toleranz, wie das Werkzeugkoordinatensystem W-KS des Industrieroboters 1 ausgerichtet wird. Durch Betätigen des Verriegelungsmittels wird dann nicht die Orientierung des Programmierhandgerätes PHG1, PHG2 im Steuerrechner 8 gespeichert, sondern es wird das im Robotersystem bekannte Werkzeugkoordinatensystem W-KS als Verfahrkoordinatensystem (Richtung, Ebene oder Verfahrraum) verwendet.

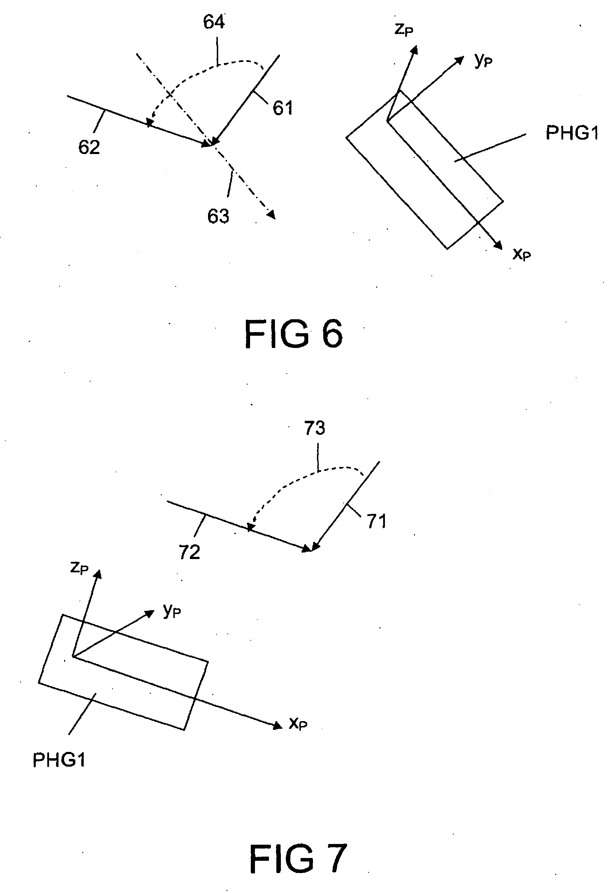

Die Fig. 6 veranschaulicht ein weiteres Ausführungsbeispiel, für das das Programmierhandgerät PHG1 alternativ derart ausgeführt ist, dass beim Betätigen des weiteren Eingabemittels (Verriegelungstaste 33) ebenfalls die momentane Orienteierung des TCPs 21 im Steuerrechner 8 gespeichert wird, durch anschließendes Betätigen der beiden Tasten 31, 32 der TCP 21 jedoch nicht längs der gespeicherten x-Achse bewegt wird, sondern bezüglich einer vorgegebenen oder vorgebbaren Rotationsachse 62 sich dreht.

So definiert beispielsweise die Orientierung einer der Koordinatenachsen des Handgerätkoordinatensystems P-KS des Programmierhandgerätes PHG1 die Rotationsachse 62 für die Orientierungsänderung des Flansches 7 bzw. des TCPs 7. Die Rotationsachse 62 kann z.B. nach dem Verriegeln oder auch vor dem Einstellen der Orientierung des TCPs21 insbesondere durch entsprechendes Ausrichten des Programmierhandgerätes PHG1 eingestellt werden.

Im Falle des in der Fig. 6 gezeigten Ausführungsbeispiels ist die Werkzeugstoßrichtung des Werkzeugs 21 beim Betätigen des Verriegelungsmittels in Richtung eines Pfeils 61 ausgerichtet. Anschließend wird das Programmierhandgerät PHG1 zur Definition der Rotationsachse 62 im Raum derart ausgerichtet, dass im Falle des vorliegenden Ausführungsbeispiels die x-Achse des Koordinatensystems des Programmierhandgeräts PHG1 bzw. dessen Längsachse L gemäß der gewünschten Rotationsachse 62 ausgerichtet ist. Dieser Zeitpunkt ist in der Fig. 6 veranschaulicht.

Durch nochmaliges Betätigen des weiteren Eingabemittels (Verriegelungstaste 33) wird die Rotationsachse 62 im Steuerrechner 8 gespeichert, ändert sich aber nicht mit einer anschließenden Bewegung des Programmierhandgerätes PHG1.

Anschließend kann die Bedienperson durch Betätigen der Tasten 31, 32 den TCP 21 um die Rotationsachse 62 z.B. in Richtung eines Pfeils 64 umorientieren, bis z.B. der TCP 21 wie gewünscht ausgerichtet ist, sodass z.B. die Werkzeugstoßrichtung des Werkzeugs 20 in Richtung eines Pfeils 62 zeigt.

Die Fig. 7 veranschaulicht ein weiteres Ausführungsbeispiel, für das das Programmierhandgerät PHG1 alternativ derart ausgeführt ist, dass beim Betätigen des weiteren Eingabemittels (Verriegelungstaste 33) ebenfalls die momentane Werkzeugstoßrichtung im Steuerrechner 8 gespeichert wird. Die gespeicherte Werkzeugstoßrichtung ist in der Fig. 7 mit einem Pfeil 71 veranschaulicht.

Anschließend wird im Falle des vorliegenden Ausführungsbeispiels das Programmierhandgerät PHG1 derart im Raum ausgerichtet, dass dessen Längsachse L (hier: die x-Achse des Handgerätkoordinatensystems P-WS) in die Richtung zeigt, in welche die Werkzeugstoßrichtung zeigen soll. Die gewünschte Werkzeugstoßrichtung ist mit einem Pfeil 72 in der Fig. 7 veranschaulicht.

Im Falle des vorliegenden Ausführungsbeispiels ist das Programmierhandgerät PHG1 derart ausgeführt, dass nach Verriegelung der durch den Pfeil 71 veranschaulichten Werkzeugstoßrichtung sich der Industrieroboter 1 in Richtung eines Pfeils 73 derart verdreht, solange die Taste 31 betätigt wird. Somit dreht sich der TCP 21 in der Ebene, die durch die Längsachse L des Programmierhandgerätes PHG1 und die beim Betätigen des weiteren Eingabemittels definierte Werkzeugstoßrichtung aufgespannt wird, wobei die Position des TCP 21 unverändert bleibt.

Diese Drehung endet, sobald die Taste 31 nicht mehr betätigt wird. Mathematisch bedeutet dies, dass die Umorientierung um eine Achse erfolgt, die durch das Kreuzprodukt zwischen der Längsachse L des Programmierhandgerätes PHG1 und des Pfeils 71 definiert wird. Die Richtung, in die die Drehung gewünscht wird, kann dabei nach Möglichkeit mit einem Winkel größer als 20° vorgegeben werden, um eine ausreichend genaue Richtungsvorgabe sicher zu stellen.

Das Programmierhandgerät PHG1, PHG2 kann auch folgendermaßen eingerichtet sein: Nach dem Abgleich des Handgerätkoordinatensystems P-KS des Programmierhandgeräts PHG1, PHG2 mit dem Roboterkoordinatensystem R-KS und damit mit dem Werkzeugkoordinatensystem W-KS, wird das Programmierhandgerät PHG1, PHG2, ohne dass der Industrieroboter 1 der Ausrichtung des Programmierhandgerätes PHG1, PHG2 folgt, derart ausgerichtet, dass diese Ausrichtung einer gewünschten Orientierung des Flansches 7 bzw. des TCPs 21 im Raum entspricht. Durch Betätigen des weiteren Eingabemittels (Verriegelungstaste 33) wird im Steuerrechner 8 die momentane Ausrichtung des Programmierhandgerätes PHG1, PHG2 zum Zeitpunkt des Betätigens gespeichert. Diese Stellung des Programmierhandgerätes PHG1, PHG2 definiert dabei die gewünschte Orientierung des Werkzeugkoordinatensystems W-KS.

Anschließend orientiert der Industrieroboter 1, z.B. ebenfalls durch Betätigen einer der Tasten 31, 32, 41-44 des Programmierhandgerätes PHG1, PHG2 kommandiert, sein Werkzeugkoordinatensystem W-KS so lange mit beispielsweise einer frei einstellbaren Geschwindigkeit um, bis die vorgegebene gespeicherte Orientierung des Programmierhandgerätes PHG1, PHG2 erreicht ist. Alternativ kann die Bewegung des Industrieroboters 1 auch stoppen, wenn die besagte Taste 31, 32, 41-44 nicht mehr betätigt wird.

Während dieser Bewegung spielt die Stellung des Programmierhandgerätes PHG1, PHG2 keine Rolle mehr. Dies ermöglicht der Bedienperson den Umorientierungsvorgang besser zu überwachen, da sie die Bewegung des Industrieroboters 1 aus unterschiedlichen Positionen aus betrachten kann. Mittels dieses Verfahrens kann z.B. die Sollorientierung eines Schweißbrenners als Beispiels eines am Flansch 7 befestigten Werkzeugs 20 am geplanten Schweißpunkt direkt vorgegeben werden. Die Bedienperson hält das Programmierhandgerät PHG1, PHG2 mit der gewünschten Orientierung an den Schweißpunkt, speichert die gewünschte Orientierung und kommandiert anschließend den Industrieroboter 1 an seiner aktuellen Raumposition die gespeicherte Orientierung einzunehmen.

Durch reine translatorische Verfahrkommandos kann dann der TCP 21 mit bereits gewünschter Orientierung des Werkzeugkoordinatensystems W-KS zum gewünschten Schweißpunkt kommandiert werden.

Eine Umorientierung kann beispielsweise im sogenannten LIN- oder im sogenannten PTP-Modus erfolgen.

Im LIN-Modus verdreht sich der Industrieroboter 1 linear von seiner Ausgangsorientierung in die gewünschte Orientierung. Es handelt sich dabei um eine reine Umorientierungsbewegung, bei der der TCP 21 im Raum stehen bleibt, d.h. sich die Position des TCPs 21 nicht ändert.

Im PTP-Modus fährt der Industrieroboter 1 die vorgegebene Orientierung auf kürzestem Weg an und verdreht dabei seine Achsen A1-A6 von der jeweiligen Startposition in eine definierte Zielposition. Der TCP 21 bleibt dabei nicht im Raum stehen. Hieraus resultiert eine für die Bedienperson relativ schwierig vorhersagbare Bewegung.

Bevor der Industrieroboter 1 sich in die vorgegebene Orientierung dreht, kann berechnet werden, ob der Industrieroboter 1 die gewünschte Orientierung überhaupt einnehmen kann. Ist dies nicht möglich, so findet z.B. keine Umorientierung statt.

Es kann auch vorgesehen sein, dass die Bedienperson bei der absoluten Orientierungsvorgabe eine Bewegungsgeschwindigkeit des Industrieroboters 1 einstellen kann.

## Patentansprüche

1. Verfahren zum Programmieren eines Industrieroboters, aufweisend folgende Verfahrensschritte:
- Orientieren eines Programmierhandgerätes (ph1, PGH2) im Raum entsprechend einer gewünschten Orientierung, die ein zu bestimmendes Koordinatensystem einnehmen soll, wobei das Programmierhandgerät (PHG1, PGH2) eingerichtet ist, seine Orientierung im Raum zu erkennen,
- Verriegeln der momentanen Orientierung des Programmierhandgerätes.(PHG1, PGH2) als gewünschte Orientierung des Koordinatensystems durch Betätigen eines ersten Eingabemittels (33) insbesondere des Programmierhandgerätes (PHG1, PGH2), so dass die Orientierung des Koordinatensystems bei einer weiteren Bewegung des Programmierhandgerätes (PHG1, PGH2) unverändert bleibt, und
- Bewegen eines ausgewählten Punktes (21) in mindestens einer im gewünschten Koordinatensystem definierten Richtung oder Orientierung durch Betätigen von zweiten Eingabemitteln (31, 32, 41-44) des Programmierhandgerätes PHG1, PGH2).

2. Verfahren nach Anspruch 1, bei dem die Orientierung im Raum des Programmierhandgerätes (PHG1, PHG2) mittels Koordinate (xₚ, yₚ, zₚ) eines dem Programmierhandgerät (PHG1, PGH2) zugeordneten Handgerätkoordinatensystems (P-KS) beschrieben ist, das mit einem Roboterkoordinatensystem (R-KS) des Industrieroboters (1) abgeglichen ist.

3. Verfahren nach Anspruch 2, bei dem am Industrieroboter (1) ein Werkzeug (20) befestigt ist, dem ein Werkzeugkoordinatensystem (W-KS) zugeordnet ist, dessen Ursprung im Tool Center Point (21) des Werkzeugs (20) liegt, wobei der Tool Center Point (21) den ausgewählten Punkt darstellt und das Handgerätkoordinatensystem (P-KS) mit dem Roboterkoordinatensystem (R-KS) des Industrieroboters (1) derart abgeglichen ist, dass wenigstens eine der Koordinatenachsen des Handgerätkoordinatensystems (P-KS) mit einer der Koordinatenachsen des werkzeugkoordinatensystem (W-KS) übereinstimmt.

4. Verfahren nach Anspruch 3, bei dem die übereinstimmenden Koordinatenachsen des Handgerätkoordinatensystems (P-KS) und des Werkzeugkoordinatensystem (W-KS) mit der Längsachse (L) des Programmierhandgerätes (PHG1, PHG2) übereinstimmen und/oder in Werkzeugstoßrichtung des Werkzeugs (20) zeigen.

5. Verfahren nach einem der Ansprüche 1 bis 4, ferner aufweisend
- Bewegen des ausgewählten Punktes (21) entlang genau einer vorgegebenen oder durch das Programmierhandgerät (PHG1) vorgebbaren Achse (L, x_{P}, x_{W}) nach dem Verriegeln der gewünschten Orientierung des Koordinatensystems durch Betätigen der ersten Eingabemittel (31, 32) oder
- Bewegen des ausgewählten Punktes (21) entlang genau einer Verfahrebene (x_{P}, x_{W}, y_{P}, y_{W}), die durch, zwei vorgegebene oder durch das Programmierhandgerät (PHG2) vorgebbare Achse (x_{P}, y_{P}, x_{W}, y_{W}) nach dem Verriegeln der gewünschten Orientierung des Koordinatensystems durch Betätigen der zweiten Eingabemittel (41-44).

6. Verfahren nach Anspruch 5, bei dem die genau eine Achse durch die Ausrichtung der Längsachse (L) des Programmierhandgerätes (PHG1) insbesondere zum Zeitpunkt des Verriegelns der gewünschten Orientierung des Koordinatensystems definiert wird, in Werkzeugstoßrichtung eines am Industrieroboter (1) befestigten Werkzeugs (21) insbesondere zum Zeitpunkt des Verriegelns der gewünschten Orientierung des Koordinatensystems zeigt, durch die Orientierung einer Koordinatenachse (x_{P}) eines Handgerätkoordinatensystem (P-KS) des Programmierhandgerätes (PHG1) insbesondere zum Zeitpunkt des Verriegelns der gewünschten Orientierung des Koordiantensystems definiert ist oder durch die Orientierung einer Koordinatenachse (x_{W}) eines Werkzeugkoordinatensystems (W-KS) eines am Industrieroboter (1) befestigten Werkzeugs (20) insbesondere zum Zeitpunkt des Verriegelns der gewünschten Orientierung des Koordinatensystems definiert ist.

7. Verfahren nach Anspruch 5, bei dem die Verfahrebene durch die Ausrichtung der Längsachse (L) des Programmierhandgerätes (PHG2) insbesondere zum Zeitpunkt des Verriegelns der gewünschten Orientierung des Koordinatensystems definiert wird, durch die Werkzeugstoßrichtung eines am Industrieroboter (1) befestigten Werkzeugs (21) insbesondere zum Zeitpunkt des Verriegelns der gewünschten Orientierung des Koordinatensystems definiert wird, durch die Orientierung zweier Koordinatenachsen (x_{P}, y_{P}) eines Handgerätkoordinatensystem (P-KS) des Programmierhandgerätes (PHG1) insbesondere zum Zeitpunkt des Verriegelns der gewünschten Orientierung des Koordinatensystems definiert ist oder durch die Orientierung zweier Koordinatenachsen (x_{W}, y_{W}) eines Werkzeugkoordinatensystems (W-KS) eines am Industrieroboter (1) befestigten Werkzeugs (20) insbesondere zum Zeitpunkt des Verriegelns der gewünschten Orientierung des Koordinatensystems definiert ist.

8. Verfahren nach einem der Ansprüche 1 bis 4, ferner aufweisend
- Definieren einer Rotationsachse (63) durch Orientieren des Programmierhandgerätes (PHG1) im Raum nach dem Verriegeln der gewünschten Orientierung des Koordinatensystems und
- Drehen des vorbestimmten Punktes (21) um die Rotationsachse (63) durch Betätigen der zweiten Eingabemittel (31, 32) des Programmierhandgerätes (PHG1).

9. Verfahren nach Anspruch 8, bei dem die Rotationsachse (63) durch den ausgewählten Punkt (21) verläuft.

10. Verfahren nach einem der Ansprüche 1 bis 4, ferner aufweisend:
- Definieren der Achse (72), bezüglich derer der ausgewählte Punkt (21) durch Betätigen der ersten Eingabemittel (31, 32) bewegt wird, durch Orientieren des Programmierhandgerätes (PHG1) im Raum nach dem Verriegeln der gewünschten Orientierung des Koordinatensystems, wobei diese Achse (72) durch den ausgewählten Punkt (21) verläuft, und
- Umorientieren des ausgewählten Punktes (21) durch Betätigen der zweiten Eingabemittel (31, 32) des Programmierhandgerätes (PHG1), sodass dieser in Richtung der Achse (72) zeigt.

11. Verfahren nach Anspruch 10, bei dem der ausgewählte Punkt (21) in Richtung der Achse (72) solange umorientiert wird, bis er entweder in Richtung dieser Achse (72) ausgerichtet ist oder solange die zweiten Eingabemittel (31, 32) betätigt werden.

12. Verfahren nach einem der Ansprüche 1 bis 11, aufweisend Nachführen der Orientierung des ausgewählten Punktes (21) während einer Bewegung des Programmierhandgerätes (PHG1, PGH2) entsprechend der Orientierung des Programmierhandgerätes (PHG1, PGH2) im Raum vor dem Erreichen und Verriegeln der gewünschten Orientierung des Koordinatensystems.

13. Verfahren nach einem der Ansprüche 1 bis 11, ferner aufweisend
- Orientieren des Programmierhandgerätes (PHG1, PGH2) im Raum entsprechend der gewünschten Orientierung des Koordinatensystems im Raum ohne ein Nachführen der Orientierung des ausgewählten Punktes (21),
- Betätigen eines dritten Eingabemittels(33) insbesondere des Programmierhandgerätes (PHG1, PHG2), wenn das Programmierhandgerät (PHG1, PHG2) entsprechend der gewünschten Orientierung ausgerichtet ist,
- Bewegen der Roboterachsen (A1-A6) derart, dass der ausgewählte Punkt (21) entsprechend der Orientierung des Programmierhandgerätes (PHG1, PHG2) zum Zeitpunkt des Betätigens des dritten Eingabemittels (31) orientiert wird und
- Verriegeln der gewünschten Orientierung des ausgewählten Punktes (21) durch Betätigen des ersten Eingabemittels (33), sodass die Orientierung des ausgewählten Punktes (21) bei einer Bewegung des Programmierhandgerätes (PHG1, PGH2) unverändert bleibt.

14. Vorrichtung, aufweisend
- einen Industrieroboter (1), der mehrere Roboterachsen (A1-A6) und einen Steuerrechner (8) zum Steuern der Roboterachsen A1-A6) aufweist, und
- ein mit dem,Steuerrechner (8) kommunizierendes Programmierhandgerät (PHG1, PHG2) zum Programmieren des Steuerrechners (8), wobei das Programmierhandgerät (PHG1, PHG2) und der Industrieroboter (1) derart ausgeführt sind, dass mit ihnen das Verfahren nach einem der Ansprüche 1 bis 13 ausführbar ist.

## Claims

1. Method for programming an industrial robot, having the following method steps:
- orientation of a handheld programmer (PHG1, PGH2) in the space corresponding to a desired orientation which a coordinate system to be defined is intended to assume, with the handheld programmer (PHG1, PGH2) being designed to identify its orientation in space,
- locking of the instantaneous orientation of the handheld programmer (PHG1, PGH2) as the desired orientation of the coordinate system by operation of a first input means (33), in particular of the handheld programmer (PHG1, PGH2), such that the orientation of the coordinate system remains unchanged in the event of further movement of the handheld programmer (PHG1, PGH2), and
- movement of a selected point (21) in at least one direction or orientation defined in the desired coordinate system, by operation of the second input means (31, 32, 41-44) of the handheld programmer (PHG1, PGH2).

2. Method according to Claim 1, in which the orientation in space of the handheld programmer (PHG1, PHG2) is described by means of coordinates (x_{P}, yₚ, zₚ) of a handheld appliance coordinate system (P-KS), which is associated with the handheld programmer (PHG1, PGH2) and is matched to a robot coordinate system (R-KS) of the industrial robot (1).

3. Method according to Claim 2, in which a tool (20) is attached to the industrial robot (1) and has an associated tool coordinate system (W-KS), whose origin is located at the tool centre point (21) of the tool (20), with the tool centre point (21) representing the selected point and with the handheld appliance coordinate system (P-KS) being matched to the robot coordinate system (R-KS) of the industrial robot (1) such that at least one of the coordinate axes of the handheld appliance coordinate system (P-KS) corresponds to one of the coordinate axes of the tool coordinate system (W-KS).

4. Method according to Claim 3, in which the corresponding coordinate axes of the handheld appliance coordinate system (P-KS) and of the tool coordinate system (W-KS) correspond to the longitudinal axis (L) of the handheld programmer (PHG1, PHG2), and/or point in the tool impact direction of the tool (20).

5. Method according to one of Claims 1 to 4, furthermore having
- movement of the selected point (21) along one and only one axis (L, x_{P}, x_{W}) which is predetermined or can be predetermined by the handheld programmer (PHG1) after locking of the desired orientation of the coordinate system by operation of the first input means (31, 32) or
- movement of the selected point (21) along one and only one movement plane (x_{P}, x_{W}, y_{P}, y_{W}), the axis (x_{P}, y_{P}, x_{W}, y_{W}) which is predetermined by two or can be predetermined by the handheld programmer (PHG2), after locking of the desired orientation of the coordinate system by operation of the second input means (41-44).

6. Method according to Claim 5, in which the one and only one axis is defined by the alignment of the longitudinal axis (L) of the handheld programmer (PHG1) in particular at the time at which the desired orientation of the coordinate system is locked, points in the tool impact direction of a tool (21), which is attached to the industrial robot (1), in particular at the time at which the desired orientation of the coordinate system is locked, is defined by the orientation of a coordinate axis (x_{P}) of a handheld appliance coordinate system (P-KS) of the handheld programmer (PHG1) in particular at the time at which the desired orientation of the coordinate system is locked, or is defined by orientation of a coordinate axis (x_{W}) of a tool coordinate system (W-KS) of a tool (20) which is attached to the industrial robot (1), in particular at the time at which the desired orientation of the coordinate system is locked.

7. Method according to Claim 5, in which the movement plane is defined by the alignment of the longitudinal axis (L) of the handheld programmer (PHG2) in particular at the time at which the desired orientation of the coordinate system is locked, is defined by the tool impact direction of a tool (21), which is attached to the industrial robot (1), in particular at the time at which the desired orientation of the coordinate system is locked, is defined by the orientation of two coordinate axes (x_{P}, y_{P}) of a handheld appliance coordinate system (P-KS) of the handheld programmer (PHG1) in particular at the time at which the desired orientation of the coordinate system is locked, or is defined by the orientation of two coordinate axes (x_{W}, y_{W}) of a tool coordinate system (W-KS) of a tool (20) which is attached to the industrial robot (1), in particular at the time at which the desired orientation of the coordinate system is locked.

8. Method according to one of Claims 1 to 4, furthermore having:
- definition of a rotation axis (63) by orientation of the handheld programmer (PHG1) in space after the locking of the desired orientation of the coordinate system, and
- rotation of the predetermined point (21) about the rotation axis (63) by operation of the second input means (31, 32) of the handheld programmer (PHG1).

9. Method according to Claim 8, in which the rotation axis (63) runs through the selected point (21).

10. Method according to one of Claims 1 to 4, furthermore having:
- definition of the axis (72) with respect to which the selected point (21) is moved by operation of the first input means (31, 32), by orientation of the handheld programmer (PHG1) in space after the locking of the desired orientation of the coordinate system, with this axis (72) running through the selected point (21), and
- reorientation of the selected point (21) by operation of the second input means (31, 32) of the handheld programmer (PHG1), such that it points in the direction of the axis (72).

11. Method according to Claim 10, in which the selected point (21) is reoriented in the direction of the axis (72) either until it is aligned in the direction of this axis (72) or for as long as the second input means (31, 32) are operated.

12. Method according to one of Claims 1 to 11, including readjustment of the orientation of the selected point (21) during a movement of the handheld programmer (PHG1, PGH2) corresponding to the orientation of the handheld programmer (PHG1, PGH2) in space before reaching and locking the desired orientation of the coordinate system.

13. Method according to one of Claims 1 to 11, furthermore having
- orientation of the handheld programmer (PHG1, PGH2) in space corresponding to the desired orientation of the coordinate system in space, without readjustment of the orientation of the selected point (21),
- operation of a third input means (33), in particular of the handheld programmer (PHG1, PHG2), when the handheld programmer (PHG1, PGH2) is aligned corresponding to the desired orientation,
- movement of the robot axes (A1-A6) such that the selected point (21) is oriented corresponding to the orientation of the handheld programmer (PHG1, PHG2) at the time of operation of the third input means (31), and
- locking of the desired orientation of the selected point (21) by operation of the first input means (33), such that the orientation of the selected point (21) remains unchanged during movement of the handheld programmer (PHG1, PGH2).

14. Apparatus, having
- an industrial robot (1) which has a plurality of robot axes (A1-A6) and a control computer (8) for controlling the robot axes (A1-A6), and
- a handheld programmer (PHG1, PHG2) which communicates with the control computer (8), for programming the control computer (8), with the handheld programmer (PHG1, PHG2) and the industrial robot (1) being designed such that the method according to one of claims 1 to 13 can be carried out using them.

## Revendications

1. Procédé pour la programmation d'un robot industriel comprenant les étapes de procédé suivantes :
- l'orientation d'un appareil manuel de programmation (PHG1, PGH2) dans l'espace en fonction d'une orientation souhaitée, qui doit adopter un système de coordonnées à définir, l'appareil manuel de programmation (PHG1, PGH2) étant réglé pour détecter son orientation dans l'espace.
- le verrouillage de l'orientation momentanée de l'appareil manuel de programmation (PHG1, PGH2) comme orientation souhaitée du système de coordonnées par actionnement d'un premier moyen de saisie (33) en particulier de l'appareil manuel de programmation (PHG1, PGH2), de sorte que l'orientation du système de coordonnées reste inchangée lors d'un autre déplacement de l'appareil manuel de programmation (PHG1, PGH2), et
- le déplacement d'un point sélectionné (21) dans au moins une direction ou orientation définie dans le système de coordonnées souhaité par actionnement de seconds moyens de saisie (31, 32, 41-44) de l'appareil manuel de programmation (PHG1, PGH2).

2. Procédé selon la revendication 1, dans lequel l'orientation dans l'espace de l'appareil manuel de programmation (PHG1, PGH2) est décrite au moyen de coordonnées (Xp, Yp, Zp) d'un système de coordonnées d'appareil manuel (P-KS) associé à l'appareil manuel de programmation (PHG1, PGH2), système qui est synchronisé avec un système de coordonnées de robot (R-KS) du robot industriel (1).

3. Procédé selon la revendication 2, dans lequel sur le robot industriel (1), est fixé un outil (20) auquel est associé un système de coordonnées d'outil (W-KS), dont l'origine se trouve dans le Tool Center Point (21) de l'outil (20), le Tool Center Point (21) représentant le point sélectionné et le système de coordonnées d'appareil manuel (P-KS) étant synchronisé avec le système de coordonnées de robot (R-KS) du robot industriel (1) de sorte qu'au moins l'un des axes de coordonnées du système de coordonnées d'appareil manuel (P-KS) correspond à l'un des axes de coordonnées du système de coordonnées d'outil (W-KS).

4. Procédé selon la revendication 3, dans lequel les axes de coordonnées concordants du système de coordonnées d'appareil manuel (P-KS) et du système de coordonnées d'outil (W-KS) correspondent à l'axe longitudinal (L) de l'appareil manuel de programmation (PHG1-PHG2) et/ou sont dirigés dans la direction d'impact de l'outil (20).

5. Procédé selon l'une des revendications 1 à 4, présentant en outre :
- le déplacement du point sélectionné (21) exactement le long d'un axe (L, Xp, Xw) imposé ou pouvant être imposé par l'appareil manuel de programmation (PHG1) après le verrouillage de l'orientation souhaitée du système de coordonnées par actionnement du premier moyen de saisie (31, 32), ou
- le déplacement du point sélectionné (21) exactement le long d'un plan de déplacement (Xp, Xw, Yp, Yw) qui est défini par deux axes (Xp, Xw, Yp, Yw) imposés ou pouvant être imposés par l'appareil manuel de programmation (PHG2) après le verrouillage de l'orientation souhaitée du système de coordonnées par actionnement des seconds moyens de saisie (41-44).

6. Procédé selon la revendication 5, dans lequel exactement un axe est défini par l'orientation de l'axe longitudinal (L) de l'appareil manuel de programmation (PGH1) en particulier au moment du verrouillage de l'orientation souhaitée du système de coordonnées, l'axe est orienté en direction de l'impact d'outil d'un outil (21) fixé sur le robot industriel (1) en particulier au moment du verrouillage de l'orientation souhaitée du système de coordonnées, est défini par l'orientation d'un axe de coordonnées (Xp) d'un système de coordonnées d'appareil manuel (P-KS) de l'appareil manuel de programmation (PHG1) en particulier au moment du verrouillage de l'orientation souhaitée du système de coordonnées ou est défini par l'orientation d'un axe de coordonnées (Xw) d'un système de coordonnées d'outils (W-KS) d'un outil (20) fixé sur le robot industriel (1) en particulier au moment du verrouillage de l'orientation souhaitée du système de coordonnées.

7. Procédé selon la revendication 5, dans lequel le plan de déplacement est défini par l'orientation de l'axe longitudinal (L) de l'appareil manuel de programmation (PGH2) en particulier au moment du verrouillage de l'orientation souhaitée du système de coordonnées, est défini par la direction de l'impact d'outil d'un outil (21) fixé sur le robot industriel (1) en particulier au moment du verrouillage de l'orientation souhaitée du système de coordonnées, est défini par l'orientation de deux axes de coordonnées (Xp, Yp) d'un système de coordonnées d'appareil manuel (P-KS) de l'appareil manuel de programmation (PHG1) en particulier au moment du verrouillage de l'orientation souhaitée du système de coordonnées ou est défini par l'orientation de deux axes de coordonnées (Xw, Yw) d'un système de coordonnées d'outils (W-KS) d'un outil (20) fixé sur le robot industriel (1) en particulier au moment du verrouillage de l'orientation souhaitée du système de coordonnées.

8. Procédé selon l'une des revendications 1 à 4, présentant en outre :
- la définition d'un axe de rotation (63) par orientation de l'appareil manuel de programmation (PHG1) dans l'espace après le verrouillage de l'orientation souhaitée du système de coordonnées et
- rotation du point prédéfini (21) autour de l'axe de rotation (63) par actionnement des seconds moyens de saisie (31, 32) de l'appareil manuel de programmation (PHG1).

9. Procédé selon la revendication 8, dans lequel l'axe de rotation (63) passe par le point sélectionné (21).

10. Procédé selon l'une des revendications 1 à 4 présentant en outre :
- la définition de l'axe (72), par rapport auquel le point sélectionné (21) est déplacé par actionnement des premiers moyens de saisie (31, 32), par orientation de l'appareil manuel de programmation (PHG1) dans l'espace après le verrouillage de l'orientation souhaitée du système de coordonnées, cet axe (72) passant par le point sélectionné (21), et
- réorientation du point sélectionné (21) par actionnement des seconds moyens de saisie (31, 32) de l'appareil manuel de programmation (PHG1), afin que le point soit dirigé en direction de l'axe (72).

11. Procédé selon la revendication 10, dans lequel le point sélectionné (21) est réorienté en direction de l'axe (72) jusqu'à ce qu'il soit orienté en direction de cet axe (72) ou tant que les seconds moyens de saisie (31, 32) sont actionnés.

12. Procédé selon l'une des revendications 1 à 11 présentant la poursuite de l'orientation du point sélectionné (21) pendant un mouvement de l'appareil manuel de programmation (PHG1, PGH2) en fonction de l'orientation de l'appareil manuel de programmation (PHG1, PGH2) dans l'espace avant d'atteindre et de verrouiller l'orientation souhaitée du système de coordonnées.

13. Procédé selon l'une des revendications 1 à 11, présentant en outre :
- l'orientation de l'appareil manuel de programmation (PHG1, PGH2) dans l'espace en fonction de l'orientation souhaitée du système de coordonnées sans poursuite de l'orientation du point sélectionné (21),
- l'actionnement d'un troisième moyen de saisie (33) en particulier de l'appareil manuel de programmation (PHG1, PGH2), quand l'appareil manuel de programmation (PHG1, PGH2) est orienté en fonction de l'orientation souhaité,
- le déplacement des axes de robots (A1-A6) de sorte que le point sélectionné (21) est orienté en fonction de l'orientation d l'appareil manuel de programmation (PHG1, PGH2) au moment de l'actionnement du troisième moyen de saisie (31) et
- le verrouillage de l'orientation souhaitée du point sélectionné (21) par actionnement du premier moyen de saisie (33), de sorte que l'orientation du point sélectionné (21) reste inchangée lors d'un déplacement de l'appareil manuel de programmation (PHG1, PGH2).

14. Dispositif présentant
- un robot industriel (1) qui présente plusieurs axes de robot (A1-A6) et un ordinateur de commande (8) pour la commande des axes de robot (A1-A6), et
- un appareil manuel de programmation (PHG1, PGH2) communicant avec l'ordinateur de commande (8) pour la programmation de l'ordinateur de commande (8), l'appareil manuel de programmation (PHG1, PGH2) et le robot industriel (1) étant conçus pour la mise en oeuvre du procédé selon l'une des revendications 1 à 13.
